Europäisches Patentamt

European Patent Office

Office européen des brevets

(19)

(11) Veröffentlichungsnummer : **0 305 773 B1**

(12) EUROPÄISCHE PATENTSCHRIFT

(45) Veröffentlichungstag der Patentschrift :
25.09.91 Patentblatt 91/39

(51) Int. Cl.⁵ : **A01D 34/68, A01D 34/76**

(21) Anmeldenummer : 88112871.4

(22) Anmeldetag : 08.08.88

(54) Fahrbares Mähgerät, insbesondere für land- und forstwirtschaftliche Zwecke.

(30) Priorität : 04.09.87 DE 3729625

(43) Veröffentlichungstag der Anmeldung :
08.03.89 Patentblatt 89/10

(45) Bekanntmachung des Hinweises auf die
Patenterteilung :
25.09.91 Patentblatt 91/39

(84) Benannte Vertragsstaaten :
AT BE CH FR GB IT LI NL

(56) Entgegenhaltungen :
AU-B- 41 352
DE-A- 2 219 855
GB-A- 1 285 021
GB-A- 2 013 467
US-A- 3 795 094
US-A- 4 679 382

(73) Patentinhaber : ESM ENNEPETALER
SCHNEID- UND MÄHTECHNIK GMBH & CO.
KG
Kölner Strasse 29
W-5828 Ennepetal 1 (DE)

(72) Erfinder : Schlasse, Manfred
Georgstrasse 11
W-5800 Hagen (DE)

(74) Vertreter : Patentanwälte Dipl.-Ing. Rudolf
Bibrach Dipl.-Ing. Elmar Rehberg
Postfach 1453 Pütterweg 6
W-3400 Göttingen (DE)

## Beschreibung

Die Erfindung bezieht sich auf ein fahrbares Mähgerät, insbesondere für land- und forstwirtschaftliche Zwecke, mit einem Motor, von dem einerseits ein Antrieb des Mähorgans und andererseits ein auf Hinterräder wirkender Fahrantrieb abgeleitet ist, wobei in den Fahrantrieb ein Getriebe und eine Kupplung eingeschaltet ist. Derartige Mähgeräte werden oft in sonst nicht mehr maschinell zugänglich Hanglagen, aber auch zum Mähen von Böschungen sowie überall dort eingesetzt, wo Gras und andere Pflanzen relativ hoch wachsen, so daß ein Mähen nur einmal oder wenige Male jährlich erfolgt. Das Mähgerät läßt sich auch für großflächige Parkanlagen zur Rasenpflege einsetzen.

Ein fahrbares Mähgerät der eingangs beschriebenen Art ist bekannt. Der Motor ist dabei als Verbrennungsmotor ausgebildet. Von ihm wird sowohl der Antrieb des Mähorgangs als auch der Fahrantrieb abgenommen. Es findet also eine Leistungsverzweigung statt, wobei in dem Leistungsstrang, der zu den angetriebenen Hinterrädern des Mähgeräts führt, ein Schaltgetriebe mit Zahnrädern sowie eine Kupplung vorgesehen ist. Das Gerät ist mit einem Rückwärtsgang ausgestattet, wobei die entsprechenden Zahnräder im Schaltbetriebe miteinander in Wirkverbindung gebracht werden. Zur Bedienung des Schaltgetriebes einerseits und der Kupplung andererseits ist je ein Hebel vorgesehen. Um z.B. vom Vorwärtsgang in den Rückwärtsgang umzuschalten, müssen diese beiden Hebel in gezielter Reihenfolge nacheinander entsprechend betätigt werden, was vergleichsweise umständlich ist und gewisse Schaltzeiten erfordert. Die Schnelligkeit des Umschaltens von Vorwärts- auf Rückwärtsfahrt läßt insoweit zu wünschen übrig. Insbesondere dann, wenn mit einem solchen Mähgerät in sehr hohem Gras gemäht wird, besteht Verstopfungsgefahr, wobei es dann erforderlich wird, den Rückwärtsgang einzulegen, um das Mähorgan wieder freizubekommen. Außerdem entstehen beim Schalten und Kuppeln entsprechende Stöße, die der Bedienungsfreundlichkeit nicht förderlich sind.

Es sind weiterhin fahrbare Mähgeräte bekannt, die ebenfalls mit einem Schaltgetriebe mit Zahnrädern zum Vor- und Rückwärtsfahren ausgestattet sind. Dabei wird der Mähteller, der in der Regel auf seinem Umfang mit Messerklingen besetzt ist, direkt von dem Motor angetrieben. Der mit senkrechter Welle aufgebaute Motor sitzt dabei fluchtend über der Welle des Mähtellers. Nachteilig daran ist, daß der Mähteller immer dann zwangsweise angetrieben wird, wenn der Motor läuft. Z.B. ist es nach beendetem Mähvorgang auf einer Hanglage wünschenswert, die Rückfahrt mit dem Mähgerät über das gemähte Feld durchführen zu können, ohne zugleich das Mähorgan antreiben zu müssen. Bei solchen Transportfahrten läßt sich jedoch das Mähorgan bei dem bekannten Mähgerät nicht abstellen. Außerdem entstehen beim Schalten der Zahnräder Stöße, die für die Handhabung des Mähgeräts hinderlich sind. Ein Rückwärtsgang ist bei diesem bekannten Gerät nicht vorhanden, so daß hier das Mähgerät manuell rückwärts gezogen werden muß, was insbesondere in Hanglagen schwierig oder mühevoll ist.

Die DE-PS 3404602 zeigt ein fahrbares Mähgerät, bei dem über einen Verbrennungsmotor nicht nur das Mähorgan, sondern auch die Hinterachse des Mähgeräts angetrieben werden. Zu diesem Zweck besitzt der Motor einen zweiten Abgang, dessen Welle immer mitangetrieben ist. Auf dieser Welle ist eine erste Keilriemenscheibe gelagert, die mit einer weiteren Keilriemenscheibe über einen Keilriemen zusammenarbeitet. Die zweite Keilriemenscheibe ist mit einem Kettentrieb mit Kettenrädern mit der Hinterachse verbunden und selbst schwenkbar am Mähgerät gelagert, und zwar derart, daß in der einen Verschwenkstellung der Keilriemen gespannt ist, wodurch die Übertragung des Drehantriebs stattfindet, während in der anderen Stellung der Keilriemen entspannt ist und damit der Fahrantrieb ausgeschaltet ist. Auch hier ist kein Rückwärtsgang vorhanden, so daß das Mähgerät bei einer erforderlich werdenden Rückwärtsfahrt in nachteiliger Weise durch die menschliche Kraft gezogen werden muß.

Die DE-A-2219855 zeigt ein angetriebenes Fahrzeug, insbesondere einen Rasenmäher, dessen Fahrantrieb auf die Hinterräder geleitet ist. Um zwei Vorwärtsgänge zu erhalten, sitzen auf der Antriebswelle zwei Keilriemenscheiben unterschiedlichen Durchmessers und auf der Antriebswellen zwei Keilriemenscheiben gleichen Durchmessers, wobei für die jeweils zugeordneten Paare von Keilriemenscheiben je ein Keilriemen vorgesehen ist. Es ist eine Spannrichtung vorgesehen in Form einer schwenkbar gelagerten Spannrollenscheibe, auf der eine erste Spannrolle angeordnet ist, die dem ersten Keilriemenscheibenpaar für den ersten Gang zugeordnet ist. Ebenso ist eine zweite Spannrolle vorgesehen, die dem zweiten Keilriemenscheibenpaar zugeordnet ist, so daß je nach dem Spannen des einen oder anderen Keilriemens der erste oder der zweite Gang in Wirkfunktion tritt. Um einen Vorwärts- und einen Rückwärtsgang zu realisieren, ist auf der Abtriebsseite nur eine Keilriemenscheibe vorgesehen, über die in unveränderter Ausbildung der Teile im übrigen, also mit einer Spannrolle, der erste Vorwärtsgang übertragen wird. Der zweite Keilriemen ist hier nicht um eine Keilriemenscheibe auf der Antriebswelle, sondern um eine gesonderte Keilriemenscheibe geführt, die auf der verschwenkbar gelagerten Spannrollenscheibe angeordnet ist. Wird diese verschwenkbar gelagerte Spannrollenscheibe so verschwenkt, daß dieser zweite Keilriemen gespannt wird, dann kann die abtriebsseitige, zweite Keilriemenscheibe zugleich in Reibkontakt zu der der Keilriemenscheibe des ersten Vorwärtsgangs

2

gelangen, wodurch das Fahrzeug nunmehr einen Rückwärtsgang erhält. Auf der verschwenkbar gelagerten Spannrollenscheibe ist also hier die Kombination einer Spannrolle für den Vorwärtsgang und einer Zwischenrolle für den Rückwärtsgang realisiert.

Es sind weiterhin fahrbare Mähgeräte bekannt, bei denen als Mähorgan ein direkt angetriebenes Propellermesser vorgesehen ist. Über ein Schneckengetriebe und einen Keilriementrieb wird darüberhinaus die Leistung auf die Hinterachse übertragen. Auch hier bewirkt eine Entspannung des Keilriemens über eine Druckrolle eine Unterbrechung der Vorwärtsfahrt. Ein Rückwärtsgang ist nicht vorgesehen, so daß maschinelle Rückwärtsfahrt nicht möglich ist.

Der Erfindung liegt die Aufgabe zugrunde, ein fahrbares Mähgerät der eingangs beschriebenen Art derart weiterzubilden, daß einerseits über den Motorantrieb eine Vorwärtsfahrt und auch eine Rückwärtsfahrt möglich ist, wobei ein schnelles und weiches, d.h. stoßfreies, Umschalten von Vorwärtsfahrt auf Rückwärtsfahrt möglich ist.

Erfindungsgemäß wird dies dadurch erreicht, daß dem Motor ein erster, kontinuierlich betriebener Keilriementrieb mit einer exzentrisch zu der Achse des Motors frei drehbar gelagerten Keilriemenscheibe zugeordnet ist, daß ein um eine Schwenkachse schwenkbarer Scheibenträger vorgesehen ist, der eine um seine Schwenkachse drehbar gelagerte Keilriemenscheibe sowie zwei weitere exzentrisch zu der Schwenkachse auf dem Scheibenträger gelagerte Keilriemenscheiben aufweist, die durch einen Keilriemen miteinander verbunden sind, daß auf dem Scheibenträger zwei Andrückräder koaxial fluchtend zu den weiteren Keilriemenscheiben und mit diesen drehfest verbunden vorgesehen sind, wobei durch Verschwenken des Scheibenträgers das eine Andrückrad mit der Innenseite oder das andere Andrückrad mit der Außenseite des Keilriemens in Wirkverbindung bringbar ist. Von dem Motor ist zunächst einmal ein normaler Keilriementrieb mit zwei Keilriemenscheiben abgeleitet, der kontinuierlich betrieben wird, d.h. die Spannung dieses Keilriemens ist zwar durch eine Druckrolle bei Reparatur- und Servicearbeiten einstellbar. Während des Mähens und gleichgültig, ob Vorwärtsfahrt oder Rückwärtsfahrt eingeschaltet ist, wird dieser Keilriementrieb über den Motor angetrieben. Hierzu muß exzentrisch zu der Achse des Motors frei drehbar eine Keilriemenscheibe vorgesehen sein. Ein solcher normaler Keilriementrieb ermöglicht es, einen um eine Schwenkachse schwenkbaren Scheibenträger anzuordnen, der seinerseits eine um seine Schwenkachse drehbar gelagerte Keilriemenscheibe sowie zwei weitere exzentrisch zu der Schwenkachse auf dem Scheibenträger gelagerte Keilriemenscheiben aufweist. Diese drei Keilriemenscheiben auf dem Scheibenträger sind durch einen gemeinsamen Keilriemen, der ebenfalls dauerhaft unter Spannung steht, miteinander verbunden, jedoch zunächst nicht mit dem ersten, kontinuierlich betriebenen Keilriementrieb, der unmittelbar den Drehantrieb von dem Motor abnimmt. Jedoch besteht die Möglichkeit, den Keilriemen des Keilriementriebs, der von dem Motor unmittelbar abzweigt, in Verbindung mit den beiden exzentrisch zu der Schwenkachse auf dem Scheibenträger gelagerten Keilriemenscheiben so zu benutzen bzw. schwenkbar zu lagern, daß entweder die eine exzentrische Keilriemenscheibe mit der Innenseite des Keilriemens des kontinuierlich betriebenen Keilriementriebs in Wirkverbindung tritt ; dies möge der Vorwärtsfahrt zugeordnet sein. Andererseits ist es möglich, die andere exzentrische Keilriemenscheibe durch Verschwenken des Scheibenträgers an die Außenseite des Keilriemens des kontinuierlich betriebenen Keilriemenantriebs in Anlage zu bringen, wodurch die umgekehrte Drehrichtung eingeschaltet wird ; dies möge der Rückwärtsfahrt zugeordnet sein. Es versteht sich, daß es eine Mittelstellung gibt, in welcher keines der beiden Keilriemenscheiben mit den Keilriemen in Wirkverbindung tritt. Diese Mittelstellung ist aus Verschleißgründen zweckmäßig. Zum Umschalten von Vorwärtsfahrt auf Rückwärtsfahrt ist lediglich die Bedienung eines einzigen Hebels notwendig, dessen Verschwenkrichtung entsprechend der Verschwenkrichtung des Scheibenträgers sogar beibehalten bleibt. Dabei ist es ohne Weiteres möglich, feinfühlig umzuschalten, ohne daß Stöße oder Schläge entstehen. Durch die Verwendung des kontinuierlich betriebenen Keilriementriebs ist eine erste Übersetzungsstufe möglich. Durch unterschiedliche Durchmesser bzw. Radien der exzentrisch auf der Schwenkachse des Scheibenträgers gelagerten Keilriemenscheiben relativ zu der zentrisch gelagerten Keilriemenscheibe ist eine weitere Übersetzung möglich. Schließlich schließt sich eine Getriebestufe an, mit der eine dritte Übersetzung im Leistungsstrang vorgesehen ist. Dies ermöglicht es, die Gesamtübersetzung sinnvoll auf die drei Stufen zu verteilen und den Mähantrieb dort abzuzweigen, wo dies sinnvoll ist.

Eine der beiden Keilriemenscheiben des kontinuierlich betriebenen Keilriementriebs kann als Doppel-Keilriemenscheibe ausgebildet sein, von der der Antrieb des Mähorgans abgeleitet wird. Es besteht damit zusätzlich die Möglichkeit, durch Lockerung der Spannung des Keilriementriebs des Mähantriebs den Antrieb des Mähorgans bewußt ein- oder auszuschalten, und zwar unabhängig von dem Fahrantrieb.

Der Antrieb des Mähorgans kann also ebenfalls ein Keilriementrieb sein, dessen Keilriemen über eine schwenkbar gelagerte Druckrolle spannbar bzw. entlastbar ist.

Der Scheibenträger ist vorzugsweise um die Schwenkachse in drei Stellungen verschwenkbar, wobei in einer Mittelstellung beide Andrückräder außer Anlage zu dem Keilriemen sind, so daß in dieser Mittelstellung der Fahrtantrieb vollständig ausgeschaltet ist, also weder der Vorwärts- noch der Rückwärtsgang eingelegt ist.

Es ist natürlich auch möglich, diese Mittelstellung nur sehr begrenzt auszubilden oder sogar ganz zu vermeiden, so daß beim Übergang von der Vorwärtsfahrt in die Rückwärtsfahrt und umgekehrt ein geringfügiges Rutschen bzw. Schleifen des Keilriemens in Kauf genommen wird.

Die Schwenkachse des Scheibenträgers kann mit der Achse der frei drehbar gelagerten Keilriemenscheibe zusammenfallend angeordnet sein. Es ergibt sich dann die Möglichkeit einer einfachen Bauweise der im schwenkbaren Scheibenträger nachgeordneten Teile des Fahrantriebs.

Die Getriebestufe für den Fahrantrieb kann aus einem Schneckengetriebe bestehen, dessen Schneckenrad auf einer Antriebswelle sitzt, mit der beidendig je ein Kettenrad drehfest verbunden ist, wobei auf der Achse der Hinterräder in Zuordnung zu den beiden Kettenrädern zwei weitere Kettenräder frei drehbar angeordnet sind ; zwischen den beiden Kettenrädern auf der Achse der Hinterräder kann eine Kupplung vorgesehen sein. Damit erhält das Schneckengetriebe zwei Ausgänge, wobei jedem Ausgang ein Kettentrieb nachgeschaltet ist, wobei die beiden Kettentriebe untereinander eine unterschiedliche Übersetzung aufweisen, so daß auf diese Art und Weise zwei Gänge geschaffen werden, also zwei Vorwärtsgänge und zwei Rückwärtsgänge. Dabei ist es wesentlich, die Getriebestufe selbsthemmend auszubilden und dem Scheibenträger im Leistungsfluß nachzuordnen bzw. nachzuschalten, damit die Selbsthemmung auch bei Unterbrechung des Leistungsstrangs durch Umschalten von Vorwärtsfahrt auf Rückwärtsfahrt bzw. umgekehrt erhalten bleibt.

Die frei drehbar gelagerte Keilriemenscheibe und der schwenkbare Scheibenträger können auf dem Gehäuse des Schneckengetriebes gelagert sein, wodurch sich eine einfache Bauweise ergibt.

Der Scheibenträger kann zwei von der Schwenkachse radial abstehende, abgekröpfte Arme aufweisen, an deren freien Enden die weiteren Keilriemenscheiben um die Andrückräder frei drehbar gelagert sind. In Verbindung mit dem kontinuierlich betriebenen Keilriementrieb ergibt sich damit eine flache Bauweise, so daß das Gehäuse und der Rahmen des Mähgeräts entsprechend günstig gestaltet werden können.

Die Kupplung zwischen den beiden Kettenrädern der beiden Kettentriebe kann eine Mittelstellung aufweisen, in der der Fahrantrieb ausgeschaltet und das Mähgerät frei schiebbar ist. Dies ist dann von Vorteil, wenn z.B. ein selbsthemmendes Schneckengetriebe Verwendung findet und sich der Motor beispielsweise nicht starten läßt. Es ist dann immer noch möglich, die Kupplung in die Mitte-lstellung zu bringen und das Mähgerät durch Schieben oder Ziehen zu bewegen.

Wenn das Schneckengetriebe selbsthemmend ausgebildet ist, entsteht auch der weitere Vorteil, daß das Mähgerät auch beim Loslassen eines Steuer- und Betätigungsbügels am Hang bei eingelegtem Gang lediglich seine Fahrgeschwindigkeit beibehält und sich nicht hangabwärts beschleunigend in Bewegung setzt. Wenn der Scheibenträger beim Umschalten von Vorwärtsfahrt auf Rückwärtsfahrt bzw. umgekehrt versehentlich oder auch gewollt in der Mittelstellung (Leerlauf) stehenbleibt, hält das selbsthemmend ausgebildete Schneckengetriebe das Mähgerät auch am Hang an seinem Ort, so daß keine Gefahr besteht, daß es sich hangabwärts allein in Bewegung setzt.

Eine bevorzugte Ausführungsform des fahrbaren Mähgeräts nach der Erfindung ist in den Zeichnungen dargestellt und wird im Folgenden weiter beschrieben. Es zeigen :

Figur 1     eine Seitenansicht des Mähgeräts, teilweise geschnitten und

Figur 2     eine Draufsicht auf das Mähgerät, teilweise geschnitten.

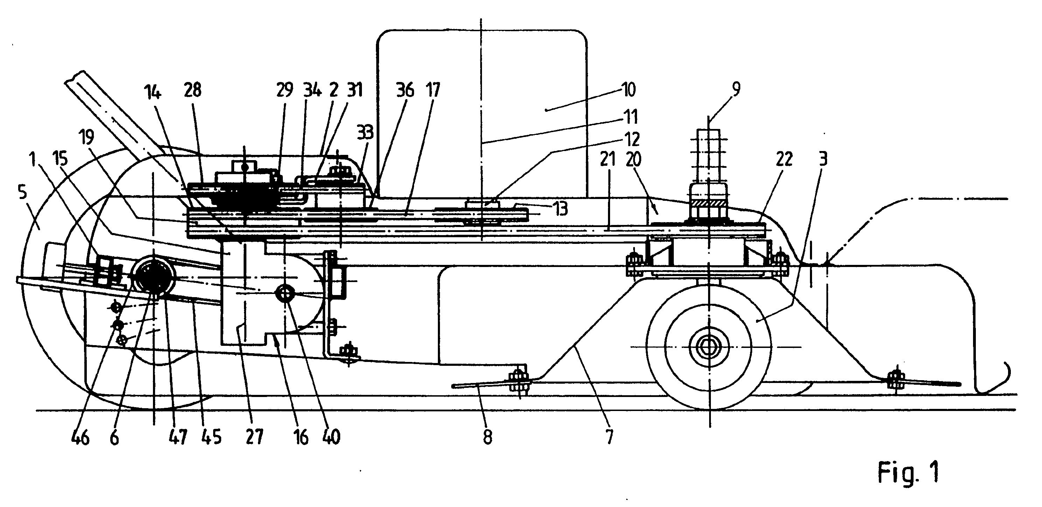

Das in den Figuren dargestellte fahrbare Mähgerät weist einen Rahmen 1 auf, auf dem die Einzelteile angeordnet sind, unter anderem auch ein mehr der Verkleidung dienendes Gehäuse 2. Das Mähgerät besitzt ein oder mehrere Vorderräder 3 (Figur 1) sowie zwei Hinterräder 4 und 5, die über eine durchgehende Achse 6 miteinander verbunden sind. Im vorderen Bereich ist ein Mähteller 7 angeordnet, der auf seinem Umfang vorzugsweise zwei Messerklingen 8 trägt, die den Schnitt erzeugen. Der Mähteller 7 ist um eine vertikale Achse 9 angetrieben.

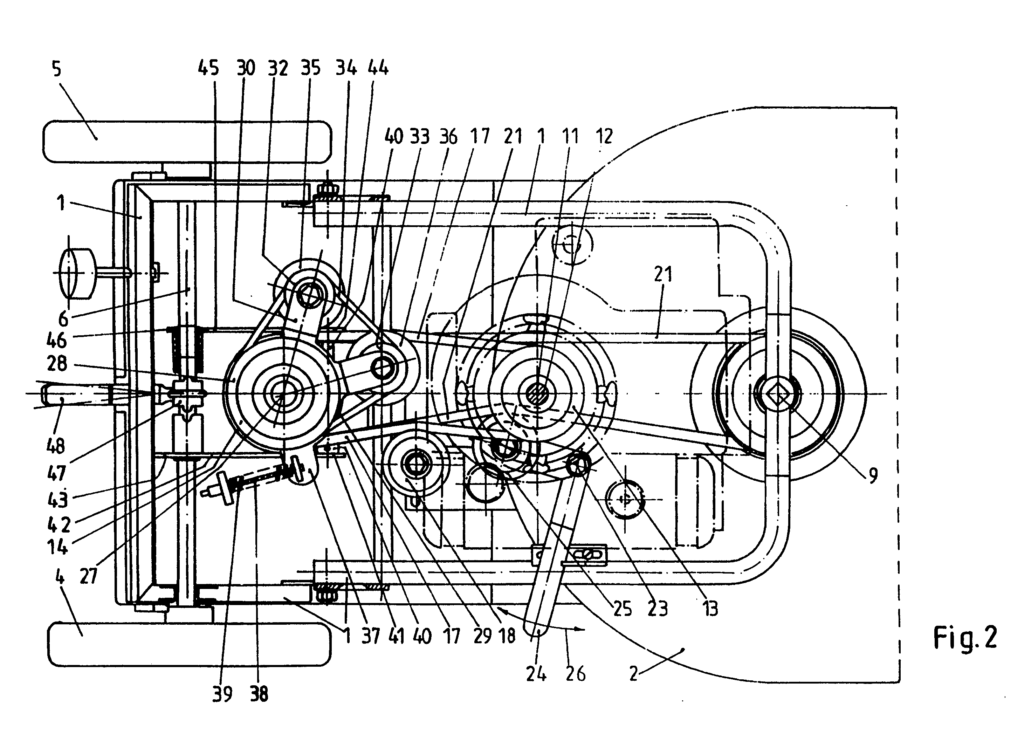

Auf dem Rahmen 1 ist ein Motor 10 mit vertikaler Achse 11 angeordnet. Eine Welle 12 ragt nach unten aus dem Motor 10 heraus. Auf der Welle 12 ist eine Keilriemenscheibe 13 drehfest angeordnet. Im hinteren Bereich des Mähgeräts ist eine Keilriemenscheibe 14 frei drehbar gelagert, und zwar hier auf einem Gehäuse 15 eines Schneckengetriebes 16. Ein Keilriemen 17 verbindet die beiden Keilriemenscheiben 13 und 14 und wird durch eine einstellbare Druckrolle 18 (Figur 2) immer auf Spannung gehalten bzw. so eingestellt, daß der Keilriemen 17 unter Spannung steht. Die Keilriemenscheibe 14 kann als Doppel-Keilriemenscheibe 19 ausgebildet sein, so daß hier ein Mähantrieb 20 über einen weiteren Keilriemen 21 und eine Keilriemenscheibe 22 abnehmbar ist. Die Keilriemenscheibe 22 ist drehfest mit dem Mähteller 7 verbunden. Es ist aber auch möglich, die Keilriemenscheibe 14 als einzelne Keilriemenscheibe auszubilden und beispielsweise die Keilriemenscheibe 13 als Doppel-Keilriemenscheibe vorzusehen, um hier den Mähantrieb 20 abzunehmen. Zum Ein- und Ausschalten des Mähantriebs bei laufendem Motor 10 ist eine um eine Schwenkachse 23 schwenkbar an einem Hebel 24 gelagerte Druckrolle 25 vorgesehen. Der Hebel 24 kann so, wie dies ein Doppelpfeil 26 andeutet, hin- und her verschwenkt werden, wobei er in der einen Stellung den Keilriemen 21 unter Spannung setzt, während der Keilriemen 21 in der anderen Stellung des Hebels 24 entspannt wird, so daß dann der Mähantrieb ausgeschaltet ist.

Um eine vertikale Achse 27 des Gehäuses 15 des Schneckengetriebes 16 ist nicht nur die Keilriemenscheibe 14 frei drehbar gelagert, sondern auch eine Keilriemenscheibe 28, die zu einem Scheibenträger 29 gehört, der seinerseits ebenfalls um die Achse 27 schwenkbar gelagert ist. Der Scheibenträger 29 besitzt zwei radial von der Achse 27 abstehende Arme 30 und 31, auf denen zwei weitere Keilriemenscheiben 32 bzw. 33 frei drehbar gelagert sind. Diese Keilriemenscheiben 32 und 33 sind mit der Keilriemenscheibe 28 über einen Keilriemen 34 dauernd verbunden, wobei der Keilriemen 34 auf Spannung eingestellt ist. Mit der Keilriemenscheibe 32 ist eine Keilriemenscheibe 35 drehfest verbunden. Ebenso sitzt an der Keilriemenscheibe 33 drehfest verbunden eine Keilriemenscheibe 36. Die Keilriemenscheibe 36 ist so ausgebildet und angeordnet, daß sie beim Verschwenken des Scheibenträgers 29 entgegen dem Uhrzeigersinn, also in der in Figur 2 mit x gekennzeichneten Richtung in Anlage an den kontinuierlich betriebenen Keilriemen 17 gelangt, während eine umgekehrte Verschwenkbewegung des Scheibenträgers 29 in Richtung y bewirkt, daß die Keilriemenscheibe 35 außen am Keilriemen 17 zur Anlage kommt. Je nach dem, welche Schwenkverstellung der Scheibenträger 29 eingenommen hat, läuft der Keilriemen 34 vorwärts oder rückwärts, was der Vorwärtsfahrt bzw. der Rückwärtsfahrt des Mähgeräts entspricht. Der Scheibenträger 29 weist einen Fortsatz 37 auf, an dem beispielsweise das Ende eines Bowdenzugs 38 angreift, über den sich die jeweils gewünschte Verschwenkbewegung des Scheibenträgers 29 einstellen läßt. Es versteht sich, daß hier eine Rasteinrichtung vorgesehen ist. Über eine Druckfeder 39 kann die entsprechende Rückverstellung bei Loslassen des Bowdenzugs 38 erfolgen. Es ist eine Mittelstellung vorgesehen, in welcher weder die Keilriemenscheibe 36 noch die Keilriemenscheibe 35 an dem Keilriemen 17 in Anlage ist, so daß der Keilriemen 17 frei durch den so gebildeten Spalt hindurchläuft. In dieser Stellung ist der Fahrantrieb ausgeschaltet und das Mähgerät wird weder vorwärts- noch rückwärtsfahrend angetrieben.

Die Keilriemenscheibe 28 ist drehfest mit einer nicht dargestellten, im Gehäuse 15 des Schneckengetriebes 16 gelagerten Schneckenwelle verbunden, mit welcher ein Schneckenrad zusammenarbeitet, welches auf einer Achse 40 angeordnet ist. Die Achse 40 ist auf beiden Seiten (Figur 2) aus dem Gehäuse 15 des Schneckengetriebes 16 herausgeführt. Es ist am einen Ende auf der Achse 40 ein Kettenrad 41 angeordnet, welches über eine Kette 42 ein Kettenrad 43 antreibt, welches frei drehbar auf der Achse 6, die den Hinterrädern 4 und 5 zugeordnet ist, drehbar gelagert ist. Auf der anderen Seite der Achse 40 sitzt ein Kettenrad 44, eine Kette 45 sowie ein weiteres Kettenrad 46, welches ebenso frei drehbar auf der Achse 6 wie das Kettenrad 43 gelagert ist. Ein Kupplungsstück 47 ist einerseits drehfest mit der Achse 6 der Hinterräder 4 und 5 verbunden, andererseits in Richtung der Achse 6 verschiebbar gelagert. Zu seiner Verschiebung dient ein Hebel 48, der in den drei dargestellten Stellungen verrastbar ist. Auf diese Art und Weise kann die Drehverbindung zwischen dem Kupplungsstück 47 zu dem einen Kettenrad 43 oder zu dem anderen Kettenrad 46 herbeigeführt werden, was zwei Gängen entspricht. Es versteht sich, daß die Übersetzung der Kettenräder 41, 43 einerseits und 44, 46 andererseits unterschiedlich gewählt ist, um unterschiedliche Gänge zu erzielen. Diese beiden Gänge sind also auf einfache Weise schaltbar und wirken sich sowohl in zwei Vorwärts- wie auch in zwei Rückwärtsgängen aus. Der Hebel 48 kann auch in einer Mittelstellung verrastet werden, in welcher der Drehantrieb zu den Hinterrädern unterbrochen ist. Dies ist dann sinnvoll, wenn sich beispielsweise der Motor 10 nicht starten läßt und ein selbsthemmendes Schneckengetriebe 16 Verwendung findet. In einem solchen Fall kann das Mähgerät immer noch auf dem Boden verschoben werden.

Das Umschalten von Vorwärts- auf Rückwärtsfahrt geschieht durch Betätigung eines Hebels bzw. des Bowdenzugs 38 und ohne Richtungsumkehr von der einen in die andere Stellung, wobei bei Vorwärtsfahrt beispielsweise die Keilriemenscheibe 36 mit dem Keilriemen 17 in Wirkverbindung steht und bei Rückwärtsfahrt die Keilriemenscheibe 35 außen an dem Keilriemen 17 zur Anlage kommt. Dabei wird die Mittelstellung durchfahren und es ist gefühlvoll möglich, von Vorwärts- auf Rückwärtsfahrt bzw. dann auch umgekehrt umzuschalten. Hierzu ist lediglich die Bedienung eines Hebels in einer Richtung erforderlich.

**Bezugszeichenliste :**

1 = Rahmen
2 = Gehäuse
3 = Vorderrad
4 = Hinterrad
5 = Hinterrad
6 = Achse

| | |
|---|---|
| 7 = | Mähteller |
| 8 = | Messerklinge |
| 9 = | vertikale Achse |
| 10 = | Motor |
| 11 = | Achse |
| 12 = | Welle |
| 13 = | Keilriemenscheibe |
| 14 = | Keilriemenscheibe |
| 15 = | Gehäuse |
| 16 = | Schneckengetriebe |
| 17 = | Keilriemen |
| 18 = | Druckrolle |
| 19 = | Doppel-Keilriemenscheibe |
| 20 = | Mähantrieb |
| 21 = | Keilriemen |
| 22 = | Keilriemenscheibe |
| 23 = | Schwenkachse |
| 24 = | Hebel |
| 25 = | Druckrolle |
| 26 = | Doppelpfeil |
| 27 = | Achse |
| 28 = | Keilriemenscheibe |
| 29 = | Scheibenträger |
| 30 = | Arm |
| 31 = | Arm |
| 32 = | Keilriemenscheibe |
| 33 = | Keilriemenscheibe |
| 34 = | Keilriemen |
| 35 = | Keilriemenscheibe |
| 36 = | Keilriemenscheibe |
| 37 = | Fortsatz |
| 38 = | Bowdenzug |
| 39 = | Druckfeder |
| 40 = | Achse |
| 41 = | Kettenrad |
| 42 = | Kette |
| 43 = | Kettenrad |
| 44 = | Kettenrad |
| 45 = | Kette |
| 46 = | Kettenrad |
| 47 = | Kupplungsstück |
| 48 = | Hebel |

## Patentansprüche

1. Fahrbares Mähgerät, insbesondere für land- und forstwirtschaftliche Zwecke, mit einem Motor (10), auf dem einerseits ein Antrieb des Mähorgans und andererseits ein auf Hinterräder (4, 5) wirkender Fahrantrieb abgeleitet ist, wobei in den Fahrantrieb ein Getriebe (41-46) und eine Kupplung eingeschaltet ist, und dem Motor (10) ein erster, kontinuierlich betriebener Keilriementrieb (13, 14, 17) mit einer exzentrisch zu der Achse (11) des Motors (10) frei drehbar gelagerten Keilriemenscheibe (14) zugeordnet ist, wobei ein um eine Schwenkachse (27) schwenkbarer Scheibenträger (29) vorgesehen ist, der eine um seine Schwenkachse (27) drehbar gelagerte Keilriemenscheibe (28) sowie zwei weitere, exzentrisch zu der Schwenkachse (27) auf dem Scheibenträger (29) gelagerte Keilriemenscheiben (32, 33) aufweist, die durch einen zweiten Keilriemen (34) miteinander verbunden sind, wobei auf dem Scheibenträger (29) zwei Andrückräder (35, 36) mit jeweils einer der o.g. Keilriemenscheiben (32 bzw. 33) koaxial fluchtend, drehfest verbunden angebracht sind, wobei durch Verschwenken des Scheibenträgers (29) das eine Andrückrad (36) mit der Innenseite oder das andere Andrückrad

6

# EP 0 305 773 B1

(35) mit der Außenseite des ersten Keilriemens (17) in Wirkverbindung bringbar ist, und der um die Schwenkachse (27) des Scheibenträgers (29) drehbar gelagerten Keilriemenscheibe (28) eine Getriebestufe (16) für den Fahrantrieb nachgeordnet ist.

2. Mähgerät nach Anspruch 1, dadurch gekennzeichnet, daß eine der beiden Keilriemenscheiben (14) des kontinuierlich betriebenen Keilriementriebs (13, 14, 17) als Doppel-Keilriemenscheibe (19) ausgebildet ist, von der der Antrieb des Mähorgans abgeleitet ist.

3. Mähgerät nach Anspruch 1 und 2, dadurch gekennzeichnet, daß der Antrieb des Mähorgans ebenfalls ein Keilriementrieb (19, 22, 21) ist, dessen Keilriemen (21) über eine schwenkbar gelagerte Druckrolle (25) spannbar bzw. entlastbar ist.

4. Mähgerät nach Anspruch 1, dadurch gekennzeichnet, daß der Scheibenträger (29) um die Schwenkachse (27) in drei Stellungen verschwenkbar ist, wobei in einer Mittelstellung beide Andrückräder (35, 36) außer Anlage zu den Keilriemen (17) sind.

5. Mähgerät nach Anspruch 1 und 4, dadurch gekennzeichnet, daß die Schwenkachse (27) des Scheibenträgers (29) mit der Achse der frei drehbar gelagerten Keilriemenscheibe (28) zusammenfallend angeordnet ist.

6. Mähgerät nach Anspruch 1, dadurch gekennzeichnet, daß die Getriebestufe für den Fahrantrieb aus einem Schneckengetriebe (16) besteht, dessen Schneckenrad auf einer Abtriebswelle (40) sitzt, mit der beidendig je ein Kettenrad (41, 44) drehfest verbunden ist, daß auf der Achse (6) der Hinterräder (4, 5) in Zuordnung zu den beiden Kettenrädern (41, 44) zwei weitere Kettenräder (43, 46) frei drehbar angeordnet sind, und daß zwischen den beiden Kettenrädern (43, 46) auf der Achse (6) der Hinterräder (4, 5) eine Kupplung (47, 43, 46) vorgesehen ist.

7. Mähgerät nach Anspruch 1 bis 6, dadurch gekennzeichnet, daß die frei drehbar gelagerte Keilriemenscheibe (28) und der schwenkbare Scheibenträger (29) auf dem Gehäuse (15) des Schneckengetriebes (16) gelagert sind.

8. Mähgerät nach Anspruch 1, dadurch gekennzeichnet, daß der Scheibenträger (29) zwei von der Schwenkachse (27) radial abstehende abgekröpfte Arme (30, 31) aufweist, an deren freien Enden die weiteren Keilriemenscheiben (32 bzw. 33) und die Andrückräder (35 bzw. 36) frei drehbar gelagert sind.

9. Mähgerät nach Anspruch 6 und 7, dadurch gekennzeichnet, daß die Kupplung (43, 46, 47) eine Mittelstellung aufweist, in der der Fahrantrieb ausgeschaltet und das Mähgerät frei schiebbar ist.

10. Mähgerät nach Anspruch 7, dadurch gekennzeichnet, daß das Schneckengetriebe (16) selbsthemmend ausgebildet ist.

## Claims

1. Mobile mowing device, in particular for agricultural and forestry purposes, having an engine (10) on which, on the one hand, a drive of the mowing element and, on the other hand, a travelling drive acting on rear wheels (4, 5) is derived, gearing (41-46) and a clutch being connected into the travelling drive, and the engine (10) being assigned a first, continuously operated V-belt drive (13, 14, 17) with a V-belt pulley (14) which is freely rotatably mounted in an eccentric manner with respect to the axis (11) of the engine (10), a pulley carrier (29) which is swivellable about a swivel axis (27) being provided which has a V-belt pulley (28) which is rotatably mounted about its swivel axis (27) and two further V-belt pulleys (32, 33) mounted on the pulley carrier (29) eccentrically with respect to the swivel axis (27), which V-belt pulleys (32, 33) are connected to one another by means of a second V-belt (34), two pressure wheels (35, 36) with in each case one of the abovementioned V-belt pulleys (32 and 33, respectively) being attached coaxially flush and fixed in terms of rotation on the pulley carrier (29), it being possible by swivelling the pulley carrier (29) to bring one pressure wheel (36) into operative connection with the inside or the other pressure wheel (35) into operative connection with the outside of the first V-belt (17), and a gear stage (16) for the travelling drive being arranged downstream of the V-belt pulley (28) which is rotatably mounted about the swivel axis (27) of the pulley carrier (29).

2. Mowing device according to Claim 1, characterised in that one of the two V-belt pulleys (14) of the continuously operated V-belt drive (13, 14, 17) is constructed as a double V-belt pulley (19) from which the drive of the mowing element is derived.

3. Mowing device according to Claim 1 and 2, characterised in that the drive of the mowing element is likewise a V-belt drive (19, 22, 21) whose V-belt (21) can be tensioned or released from tension via a swivellably mounted pressure roller (25).

4. Mowing device according to Claim 1, characterised in that the pulley carrier (29) can be swivelled about the swivel axis (27) in three positions, both pressure wheels (35, 36) being, in a centre position, in a non-contacting state with respect to the V-belts (17).

7

5. Mowing device according to Claim 1 and 4, characterised in that the swivel axis (27) of the pulley carrier (29) is arranged to coincide with the axis of the freely rotatably mounted V-belt pulley (28).

6. Mowing device according to Claim 1, characterised in that the gear stage for the travelling drive consists of a worm gear (16), the worm wheel of which is seated on a drive shaft (14) to which in each case one chain wheel (41, 44) is connected, fixed in terms of rotation, on each side, in that two further chain wheels (43, 46) are arranged freely rotatably on the axle (6) of the rear wheels (4, 5) in assignment to the two chain wheels (41, 44), and in that a clutch (47, 43, 46) is provided between the two chain wheels (43, 46) on the axle (6) of the rear wheels (4, 5).

7. Mowing device according to Claim 1 to 6, characterised in that the freely rotatably mounted V-belt pulley (28) and the swivellable pulley carrier (29) are mounted on the housing (15) of the worm gear (16).

8. Mowing device according to Claim 1, characterised in that the pulley carrier (29) has two arms (30, 31) protruding radially from the swivel axis (27) and bent at right angles, at the free ends of which the further V-belt pulleys (32 and 33, respectively) and the pressure wheels (35 and 36, respectively) are freely rotatably mounted.

9. Mowing device according to Claims 6 and 7, characterised in that the clutch (43, 46, 47) has a centre position in which the travelling drive is switched off and the mowing device is freely pushable.

10. Mowing device according to Claim 7, characterised in that the worm gear (16) is of self-locking design.

## Revendications

1. Appareil à moissonner mobile, en particulier à des fins agricoles et forestières, avec un moteur (10) duquel est dérivé d'une part un entraînement de l'organe de coupe et d'autre part un entraînement pour la propulsion agissant sur des roues arrière (4, 5), une transmission (41-46) et un embrayage étant interposés dans l'entraînement pour la propulsion, une première transmission à courroie trapézoïdale (13, 14, 17) fonctionnant continuellement étant associée au moteur (10), avec une poulie (14) à gorge trapézoïdale tournant librement, montée en position excentrée par rapport à l'axe (11) du moteur (10), en prévoyant un support (29) de poulies pouvant pivoter autour d'un axe de pivotement (27), ce support portant une poulie (28) à gorge trapézoïdale tournant autour de l'axe de pivotement (27), ainsi que deux autres poulies à gorge trapézoïdale (32, 33) montées sur le support de poulies (29) en position excentrée par rapport à l'axe de pivotement (27), qui sont reliées l'une à l'autre par une deuxième courroie trapézoïdale (34), tandis que sur le support de poulies (29) sont placées deux roues de pression (35, 36) solidaires en rotation chacune avec une des poulies précitées (32, 33) en alignement coaxial avec celle-ci, tandis que par pivotement du support de poulies (29) une des roues de pression (36) peut être mise en coopération avec la face intérieure de la première courroie trapézoïdale (17) ou l'autre roue de pression (35) peut être mise en coopération avec la face extérieure de ladite première courroie (17), tandis qu'un étage de transmission (16) pour la propulsion est subordonné à la poulie (28) à gorge trapézoïdale montée tournante autour de l'axe de pivotement (27) du support de poulies (29).

2. Appareil à moissonner selon la revendication 1 caractérisé en ce qu'une des deux poulies à gorge (14) de la transmission à courroie (13, 14, 17) fonctionnant continuellement est sous la forme d'une poulie (19) à double gorge trapézoïdale à partir de laquelle est dérivé l'entraînement de l'organe de coupe.

3. Appareil à moissonner selon les revendications 1 et 2, caractérisé en ce que l'entraînement de l'organe de coupe est, lui aussi, une transmission (19, 22, 21) à courroie trapézoïdale, dont la courroie trapézoïdale (21) peut être tendue ou détendue au moyen d'un galet presseur (25) à support pivotant.

4. Appareil à moissonner selon la revendication 1, caractérisé en ce que le support de poulies (29) peut pivoter en trois positions autour de son axe de pivotement (27), disposition dans laquelle, dans une position médiane les deux roues de pression (35, 36) ne sont pas en appui contre la courroie trapézoïdale (17).

5. Appareil à moissonner selon les revendications 1 et 4, caractérisé en ce que l'axe de pivotement (27) du support de poulies (29) est disposé en alignement avec l'axe de poulie (28) à gorge trapézoïdale montée de manière à tourner librement.

6. Appareil à moissonner selon la revendication 1, caractérisé en ce que l'étage de transmission pour l'entraînement de propulsion consiste en une transmission à vis sans fin (16) dont la roue hélicoïdale est calée sur un arbre d'entraînement (40) sur les deux extrémités duquel est monté respectivement un pignon de chaîne (41, 44) solidaire en rotation avec cet arbre, en ce que, sur l'axe (6) des roues arrière (4, 5) sont montés deux autres pignons de chaîne (43, 46) tournant librement, en dépendance des deux pignons de chaîne (41, 44), et en ce qu'entre les deux pignons de chaîne (43, 46) il est prévu sur l'axe (6) des roues arrière (4, 5) un embrayage (47, 43, 46).

7. Appareil à moissonner selon les revendications 1 à 6, caractérisé en ce que la poulie à gorge trapézoïdale (28) montée de façon à tourner librement et le support de poulies pivotant (29) sont montés sur le boîtier (15) de la transmission à vis sans fin (16).

8. Appareil à moissonner selon la revendication 1, caractérisé en ce que le support de poulies (29) présente deux bras coudés (30, 31) s'étendant radialement à partir de l'axe de pivotement (27), sur les extrémités libres desquels sont montées, en étant librement tournantes, les autres poulies (32 et 33) à gorge trapézoïdales et les roues de pression (35 et 36).

9. Appareil à moissonner selon les revendications 6 et 7, caractérisé en ce que l'embrayage (43, 46, 47) présente une position médiane dans laquelle l'entraînement pour la propulsion est débrayé et dans laquelle l'appareil peut être librement poussé.

10. Appareil à moissonner selon la revendication 7, caractérisé en ce que la transmission à vis sans fin (16) est auto-bloquante.

Fig. 1

Fig. 2